# FASCICULE DE BREVET EUROPEEN

(11) **EP 0 551 356 B1**
(45) Date de publication et mention de la délivrance du brevet: **23.08.1995**
(21) Numéro de dépôt: 91917503.4
(22) Date de dépôt: 24.09.1991
(51) Int. Cl.: B60C 11/11

(54) **EQUIPEMENT PNEUMATIQUE POUR UN VEHICULE ROULANT SUR SOLS ENNEIGES, VERGLACES**
REIFENAUSRÜSTUNG FÜR VERSCHNEITE, VEREISTE BÖDEN
TYRE EQUIPMENT FOR A VEHICLE RUNNING ON ICY GROUNDS OR SURFACES COVERED WITH SNOW

(30) Priorité: 03.10.1990 FR 9012272
(43) Date de publication de la demande: 21.07.1993
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: LAGNIER, Alain, F-63540 Romagnat (FR)
(74) Mandataire: Devaux, Edmond-Yves
(86) Numéro de dépôt international: FR9100745
(87) Numéro de publication internationale: WO9205969

(56) Documents cités:
- EP-A- 0 194 069
- EP-A- 0 378 090
- DE-A- 3 738 159
- GB-A- 502 992
- US-A- 4 802 547

## Description

L'invention concerne un train de pneumatiques pour des véhicules classiques de tourisme possédant un essieu moteur et un essieu porteur, les pneumatiques équipant les roues motrices étant différents par leurs bandes de roulement des pneumatiques équipant les roues porteuses.

Un tel équipement est connu. Le brevet FR 1 473 029 de la demanderesse enseigne que la stabilité des véhicules est améliorée et que la tendance à survirer est atténuée si la dérive des pneumatiques montés à l'arrière du véhicule est inférieure à la dérive des pneumatiques montés à l'avant. Ainsi, dans le cas de voitures rapides et surpuissantes, la solution de l'époque la meilleure consistait à équiper l'arrière et l'avant du véhicule de pneumatiques de dimensions identiques mais dont les coefficients de dérive variaient entre l'arrière et l'avant, ces coefficients de dérive étant obtenus à partir de modifications de structure interne, ou de modifications de bande de roulement.

Outre que l'ensemble position avant, position arrière n'est pas l'équivalent de l'ensemble essieu moteur, essieu porteur, les pneumatiques considérés ci-dessus ne sont pas des pneumatiques spécialement conçus pour l'équipement d'un véhicule destiné à rouler sur des sols peu adhérents, tels que les sols enneigés, verglacés, mouillés ou boueux.

Sur ces véhicules, il est demandé à l'essieu moteur de passer un couple sur les sols peu adhérents pour transmettre un mouvement au véhicule, et cette transmission du couple doit se faire si possible avec une usure de la bande de roulement la plus faible possible. Quant à l'essieu porteur, il ne participe que faiblement en présence d'efforts longitudinaux, mais est cependant susceptible de contribuer à un bon freinage du véhicule. Par contre, il devrait contribuer de manière presque exclusive à la stabilité du véhicule sur les sols considérés et en particulier à la tenue transversale du véhicule, que ce soit en ligne droite, ou en virages.

La demande de brevet EP 0 194 069 est un autre exemple. Elle montre un train de pneumatiques radiaux de même dimension et de même structure interne, pour l'équipement d'un véhicule destiné à rouler sur des sols quelconques, et ayant au moins un essieu moteur et un essieu porteur.

Les pneumatiques des deux essieux sont munis de bandes de roulement ayant la même sculpture dite en V, les pneumatiques de l'essieu moteur ayant un sens de roulage inverse de celui des pneumatiques de l'essieu porteur, et ces bandes de roulement étant munies d'éléments en relief ou blocs pourvus d'incisions faites au couteau, les incisions de la rangée centrale de blocs étant transversales.

Un tel équipement ne permet pas d'obtenir le compromis de propriétés désirées tel que décrit ci-dessus. Pour l'obtenir l'invention propose d'équiper un véhicule destiné à rouler sur des sols enneigés, verglacés, mouillés ou boueux avec des pneumatiques radiaux de même structure interne, les pneumatiques de(s) l'essieu(x) moteur(s) ayant des bandes de roulement munies de blocs pourvus d'incisions de largeur non nulle dont les tracés sur la surface de la bande de roulement sont transversaux, et les pneumatiques de(s) l'essieu(x) porteur(s) ayant des bandes de roulement munies de blocs pourvus d'incisions de largeur non nulle dont les traces sur la surface de la bande de roulement sont elliptiques.

On entend par tracés transversaux des incisions soit des tracés rectilignes de direction parallèle à l'axe de rotation du pneumatique ou des tracés dont la direction fait avec une parallèle à l'axe de rotation un angle au plus égal à ± 20°, soit des tracés sinusoïdaux ou en ligne brisée, dont les axes moyens sont parallèles à l'axe de rotation du pneumatique ou font avec ledit axe un angle au plus égal à ± 20°.

Dans la notion de tracé elliptique, il faut aussi inclure le tracé circulaire, le cercle n'étant mathématiquement qu'un cas particulier de l'ellipse.

De manière préférentielle, les bandes de roulement de pneumatiques destinés à équiper les essieux moteurs seront munies de blocs ou éléments en relief sous forme de troncs de prisme ou de pyramide à base polygonale, le nombre de côtés de ladite base n'étant pas supérieur à six et de préférence égal à quatre. Ces blocs sont séparés par des rainures transversales dans le sens circonférentiel, le qualificatif "transversal" ayant la même définition que pour les incisions, et par des rainures longitudinales dans le sens axial. On entend par rainure longitudinale une rainure parfaitement longitudinale, mais aussi une rainure formée de segments de droite en zigzag, ces segments faisant avec la direction circonférentielle un angle au plus égal à ± 25°.

Les bandes de roulement de pneumatiques destinés à équiper les essieux porteurs seront munies préférentiellement de blocs tronconiques à base elliptique, et/ou de blocs tronconiques à base circulaire.

Dans le cas d'une base elliptique, le petit axe de l'ellipse aura une longueur qui ne sera pas inférieure à 0,6 fois la longueur du grand axe de l'ellipse. Si les blocs tronconiques à base circulaire sont munis d'au moins deux incisions circulaires et concentriques, les blocs tronconiques à base elliptique peuvent être munies soit d'au moins deux incisions circulaires soit d'au moins deux incisions elliptiques.

La bande de roulement des pneumatiques pour essieux porteurs est soit munie exclusivement de blocs tronconiques à base circulaire, soit munie exclusivement de blocs tronconiques à base elliptique, soit munie à la fois de blocs tronconiques à base elliptique et à base circulaire. Quelle que soit la configuration de la bande de roulement, les blocs tronconiques sont avantageusement tous séparés les uns des autres par des creux, la surface occupée sur la surface de la bande de roulement pour les blocs étant avantageusement comprise entre O,25 fois et O,45 fois la surface totale de ladite bande de roulement.

Les dimensions des blocs tronconiques sur la surface de la bande de roulement peuvent être variables. Dans le cas de blocs à base circulaire, le rayon du cercle peut varier de 15 mm à 35 mm, et dans le cas de blocs à base elliptique, la longueur du grand axe de l'ellipse est comprise entre 25 et 58 mm.

Les bandes de roulement pour pneumatiques porteurs devant cependant participer au freinage du véhicule, il est avantageux que, dans le cas de la présence de blocs tronconiques, à base elliptique, les grands axes des ellipses soient orientés transversalement.

L'invention sera mieux comprise à l'aide du dessin illustrant des exemples non limitatifs d'exécution et où l'on voit
- sur la figure 1 une vue schématique d'un secteur de bande de roulement pour pneumatique destiné à équiper un essieu moteur,
- sur la figure 2 une vue schématique d'un secteur de bande de roulement pour pneumatique destiné à équiper un essieu porteur,
- sur la figure 3 une vue schématique d'un secteur d'une variante de bande de roulement pour pneumatique d'essieu porteur.

La portion de bande de roulement (1) d'un pneumatique 175 R 14 X destiné à équiper l'essieu moteur, représentée sur la figure (1), comporte six rangées d'éléments en relief ou blocs (11) sous forme de troncs de pyramide à base quadrilatère. Ces blocs (11) sont séparés dans le sens axial par des rainures longitudinales (13) et dans le sens circonférentiel par des rainures transversales (12), rainures dont la largeur est généralement comprise entre 3 et 7 mm. Les blocs (11) sont pourvus d'incisions (14) présentant sur la surface de la bande de roulement (1) des traces rectilignes, avec dans chaque élément en relief des orientations parallèles entre elles et transversales.

Ces incisions (14) sont aussi parallèles aux rainures transversales (12), de sorte que toutes les arêtes créées par les rainures et par les incisions sont pratiquement perpendiculaires au plan équatorial du pneumatique, d'où l'aptitude de ce pneumatique à transmettre un couple moteur.

La portion de bande de roulement (2) d'un même pneumatique 175-R14X destiné à équiper l'essieu porteur est représentée sur la figure (2) et comporte cinq rangées de blocs tronconiques à base circulaire (21), séparés dans le sens axial et circonférentiel par des creux (22). Les blocs (21) sont tous munis d'au moins deux incisions (24) qui sont circulaires et concentriques entre elles, c'est-à-dire des incisions efficaces quelque soit le sens de la sollicitation imposée à la bande de roulement. Il est est de même des arêtes circulaires des blocs (21).

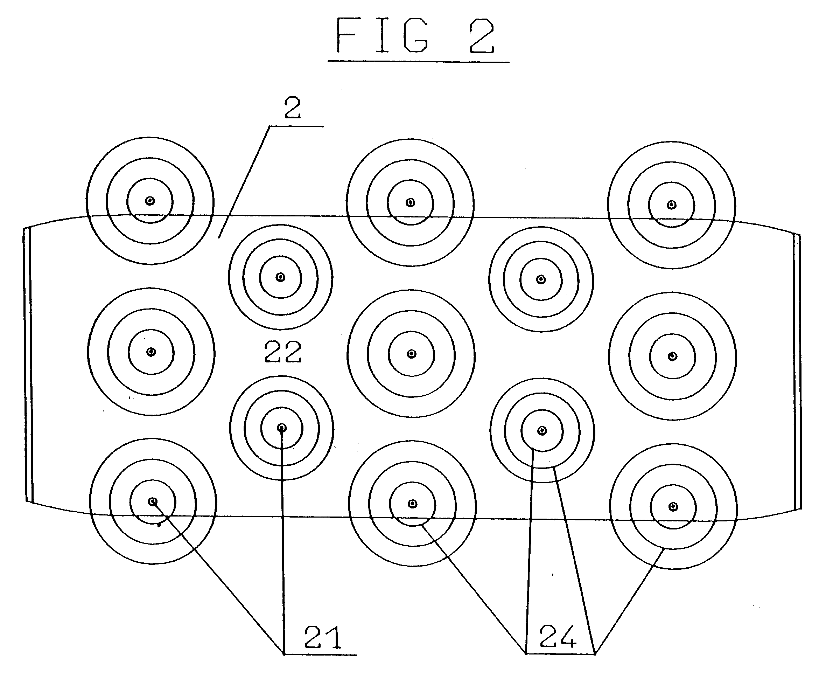

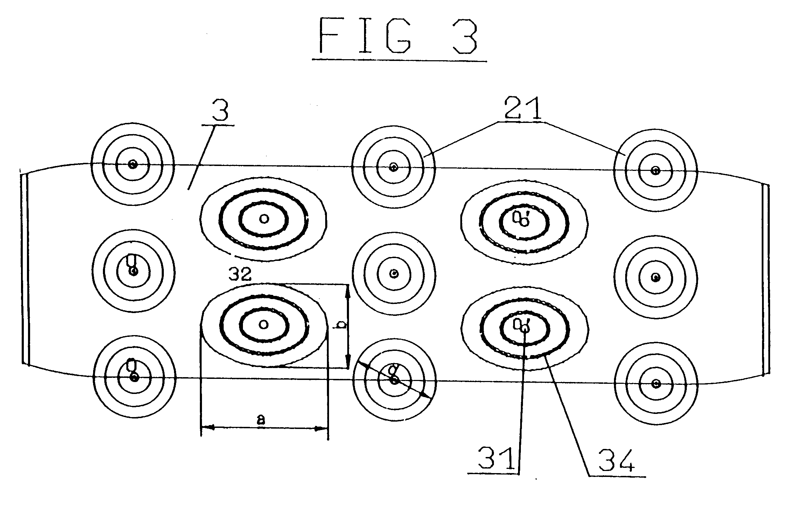

La portion de bande de roulement (3) selon la figure 3 est une variante de la bande de roulement montrée sur la figure 2. Les deux rangées de blocs tronconiques à base circulaire de plus petit diamètre sont remplacées par deux rangées de blocs (31) tronconiques à base elliptique, le petit axe (b) ayant une longueur égale au diamètre (d) de la base circulaire des blocs (21) à petit diamètre de la figure 2, et le grand axe (a) ayant une longueur égale à 1,55 fois la longueur du petit axe (b).

Dans le cas montré sur la figure 3, le diamètre des blocs à base circulaire est de 20 mm, le petit axe (b) des blocs à base elliptique a une longueur de 20 mm et le grand axe (a) une longueur de 31 mm.

Les centres (0) des bases circulaires des blocs (21) sont distants circonférentiellement de 63 mm. Les centres (O') des bases elliptiques des blocs (31) sont distants circonférentiellement de 63 mm. Les lignes circonférentielles passant d'une part par les centres (O), d'autre part par les centres (O') sont distantes axialement de la même quantité, égale à 31,5 mm.

Si l'on compare les performances obtenues avec un véhicule équipé de quatre pneumatiques munis de bandes de roulement selon la figure (1), au même véhicule équipé sur l'essieu moteur, qui est aussi l'essieu avant, de pneumatiques munis de bandes de roulement selon la figure (1), et sur l'essieu porteur, qui est aussi essieu arrière, de pneumatiques munis de bandes de roulement selon la figure 2, les résultats qui suivent peuvent être énoncés.

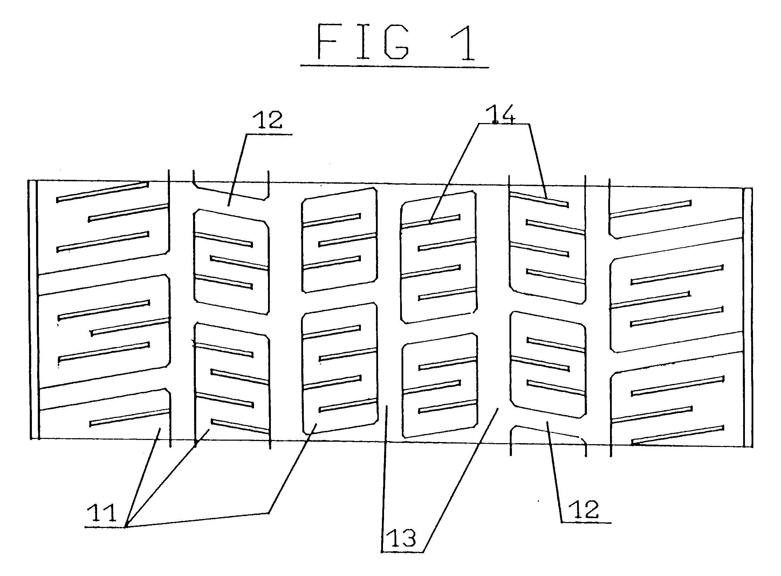

Dans le test d'hydroplanage, consistant à analyser le comportement du véhicule lancé linéairement à 90 km/h dans une flaque d'eau dont la hauteur est de 5 mm, si l'on donne la note 100 au véhicule témoin (quatre bandes de roulement selon la figure 1), le véhicule dit d'essai est nettement plus stable, d'environ 10 %.

Par contre, sur des sols humides, c'est-à-dire des sols où l'eau présente une hauteur au plus égale à 2 mm, les mesures de distances de freinage donnent l'avantage au véhicule témoin, d'environ 15 %.

Quant au comportement sur la neige ou sur le verglas, que ce soit dans un test de motricité (démarrage en pente par exemple) ou dans un test de freinage, il est difficile d'émettre une conclusion, étant donné les dispersions de mesure existantes.

Les tests énumérés ci-dessus ne concernent que le comportement d'un véhicule roulant en ligne droite. Si nous considérons le comportement en ligne courbe, les deux tests qui suivent font ressortir un net avantage au véhicule d'essai équipé avec des bandes de roulement à blocs tronconiques, le premier test concerne le comportement du véhicule sur une route virageuse enneigée, et l'avantage en stabilité, en maniabilité du véhicule, ainsi qu'en progressivité de la réponse à un coup de volant peut se chiffrer à 50 %. Cet avantage se retrouve d'ailleurs en comportement virageux sur sol verglacé et en comportement sur route virageuse sèche, mais de moindre importance puisque se chiffrant à environ 15 %.

En d'autres termes, la monte "mixte" revendiquée permet un meilleur équilibre du véhicule dans toutes les configurations de roulage faisant entrer en jeu des efforts transversaux sur les sols considérés.

## Revendications

1. Véhicule destiné à rouler sur des sols enneigés, verglacés, humides et ayant au moins un essieu moteur et un essieu porteur équipés d'un train de pneumatiques radiaux de même dimension et de même structure interne, les pneumatiques de(s) l'essieu(x) moteur(s) ayant des bandes de roulement (1) munies d'éléments en relief ou premiers blocs (11) pourvus d'incisions (14) de largeur (e) non nulle et dont les tracés sur la surface de la bande de roulement (1) sont transversaux, et les pneumatiques de(s) l'essieu(x) porteur(s) ayant des bandes de roulement (2, 3) munies d'éléments en relief ou blocs secondaires (21, 31) pourvus d'incisions (24, 34) de largeur non nulle, caractérisé en ce que les tracés des incisions (24, 34) des blocs secondaires (21, 31) sont elliptiques.

2. Véhicule selon la revendication 1, caractérisé en ce que les premiers blocs (11) sont des troncs de pyramide à base au plus hexagonale et de préférence quadrilatère, séparés dans le sens circonférentiel par des rainures transversales (12) et dans le sens axial par des rainures longitudinales (13).

3. Véhicule selon l'une des revendications 1 à 2, caractérisé en ce que les blocs secondaires (21, 31) sont des troncs de cône à base elliptique ou circulaire séparés les uns des autres par des creux (22, 32).

4. Véhicule selon la revendication 3, caractérisé en ce que les blocs secondaires (21) ont tous une base circulaire.

5. Véhicule selon la revendication 3, caractérisé en ce que les blocs secondaires (21, 31) sont en partie à base circulaire et en partie à base elliptique, les grands axes des ellipses étant transversaux.

## Claims

1. A vehicle intended to travel on snow-covered, icy or wet ground and having at least one driving axle and one load-bearing axle which are equipped with a set of radial tyres of the same size and same internal structure, the tyres of the driving axle(s) having treads (1) provided with elements in relief or first blocks (11) provided with incisions (14) of a width (e) other than zero and the traces of which on the surface of the tread (1) are transverse, and the tyres of the load-bearing axle(s) having treads (2, 3) provided with elements in relief or secondary blocks (21, 31) provided with incisions (24, 34) of a width other than zero, characterised in that the traces of the incisions (24, 34) of the secondary blocks (21, 31) are elliptical.

2. A vehicle according to Claim 1, characterised in that the first blocks (11) are truncated pyramids having a base which is at most hexagonal and preferably quadrilateral, separated in the circumferential direction by transverse grooves (12) and in the axial direction by longitudinal grooves (13).

3. A vehicle according to one of Claims 1 to 2, characterised in that the secondary blocks (21, 31) are truncated cones with elliptical or circular base, separated from each other by hollows (22, 32).

4. A vehicle according to Claim 3, characterised in that the secondary blocks (21) all have a circular base.

5. A vehicle according to Claim 3, characterised in that the secondary blocks (21, 31) partly have circular bases and partly have elliptical bases, the major axes of the ellipses being transverse.

## Patentansprüche

1. Fahrzeug zum Fahren auf verschneiten, vereisten und feuchten Böden mit wenigstens einer Antriebsachse und einer Laufachse, die mit einem Satz von Radialreifen mit gleichen Maßen und gleichem inneren Aufbau ausgerüstet sind, wobei die Luftreifen der Antriebsachse(n) Laufstreifen (1) mit vorspringenden Elementen oder ersten Blöcken (11) aufweisen, die mit Einschnitten (14) nicht verschwindender Breite(n) versehen sind, deren Verläufe auf der Oberfläche des Laufstreifens (1) quer orientiert sind, und die Luftreifen der Laufachse(n) Laufstreifen (2, 3) mit zweiten vorspringenden Elementen oder Blöcken aufweisen, die mit Einschnitten (24, 34) nicht verschwindender Breite versehen sind,
dadurch gekennzeichnet, daß
die Verläufe der Einschnitte (24, 34) der zweiten Blöcke (21, 31) elliptisch sind.

2. Fahrzeug nach Anspruch 1, dadurch gekennzeichnet, daß die ersten Blöcke (11) Pyramidenstümpfe mit höchstens sechs- und vorzugsweise viereckiger Basis sind, die in Umfangsrichtung durch Querrillen (12) und in Axialrichtung durch Längsrillen (13) getrennt sind.

3. Fahrzeug nach einem der Ansprüche 1 bis 2, dadurch gekennzeichnet, daß die zweiten Blöcke (21, 31) Kegelstümpfe mit elliptischer oder kreisförmiger Basis sind, die voneinander durch Ausnehmungen (22, 32) getrennt sind.

4. Fahrzeug nach Anspruch 3, dadurch gekennzeichnet, daß die zweiten Blöcke (21) alle eine kreisförmige Basis haben.

5. Fahrzeug nach Anspruch 3, dadurch gekennzeichnet, daß die zweiten Blöcke (21, 31) teilweise eine kreisförmige und teilweise eine elliptische Basis haben, wobei die langen Achsen der Ellipsen quer orientiert sind.
